# FASCICULE DE BREVET EUROPEEN

(11) **EP 3 824 195 B1**
(45) Date de publication et mention de la délivrance du brevet: **18.09.2024**
(21) Numéro de dépôt: 19759644.8
(22) Date de dépôt: 17.07.2019
(51) Int. Cl.: F16B 5/02, F16B 25/00, F16B 25/10

(54) **COMPOSANT DE FIXATION, PROCÉDÉ D'ASSEMBLAGE ET DISPOSITIF D'ASSEMBLAGE**
BEFESTIGUNGSKOMPONENTE, MONTAGEVERFAHREN UND MONTAGEVORRICHTUNG
FASTENING COMPONENT, ASSEMBLY METHOD AND ASSEMBLY DEVICE

(30) Priorité: 17.07.2018 FR 1856582
(43) Date de publication de la demande: 26.05.2021
(73) Titulaire: Grojean, Maxime, 55200 Commercy (FR); Grojean, Alex, 55200 Commercy (FR)
(72) Inventeur: Grojean, Maxime, 55200 Commercy (FR); Grojean, Alex, 55200 Commercy (FR)
(74) Mandataire: Germain Maureau
(86) Numéro de dépôt international: PCT/FR2019/051799
(87) Numéro de publication internationale: WO 2020/016528

(56) Documents cités:
- EP-A1- 0 370 674
- DE-A1- 102011 109 815
- DE-A1- 102014 012 142
- FR-A- 1 428 786

## Description

La présente invention concerne un composant de fixation destiné à l'assemblage de deux pièces, notamment dans le cadre d'un assemblage multi-matériaux, un procédé d'assemblage des deux pièces par l'intermédiaire de ce composant de fixation, ainsi qu'un dispositif d'assemblage destiné à la mise en oeuvre de ce procédé.

Il est connu d'assembler deux tôles entre elles au moyen de composants de fixation comme des vis fluo-perceuses ou des clous. Ces composants de fixation comprennent une pointe qui permet le perçage des deux tôles et un corps qui est destiné à être inséré dans le trou percé par la pointe afin de réaliser la fixation des deux tôles. La pointe a classiquement une unique fonction de perçage des tôles et, à l'issue de l'assemblage, la pointe, solidaire du corps, reste en saillie par rapport aux tôles assemblées.

Cependant, cette pointe restante, en saillie, présente plusieurs inconvénients. Un premier inconvénient est un risque de blessure pour un personnel de maintenance ou un utilisateur d'un produit incluant les tôles ainsi assemblées. Un deuxième inconvénient est l'encombrement que génère cette pointe saillante pièce. Un troisième inconvénient est la masse inutile que représente la pointe dans l'ensemble formé des tôles assemblées, alors que les assemblages multi-matériaux ont notamment pour intérêt d'alléger la structure qu'ils équipent, comme par exemple un véhicule. Un composant de fixation est connu de FR 1 428 786 A.

Aussi, la présente invention vise à pallier tout ou partie de ces inconvénients en proposant un composant de fixation permettant un assemblage multi-matériaux améliorant la sécurité, la compacité et la masse de l'assemblage, tout en assurant un assemblage efficace et solide.

A cet effet, l'invention a pour objet un composant de fixation selon la revendication 1, destiné à l'assemblage d'une première pièce et d'une deuxième pièce, où le composant de fixation comprend :
un corps s'étendant longitudinalement selon un axe A,
une tête configurée pour permettre une mise en rotation du composant de fixation autour de l'axe A, et
une pointe reliée au corps, dans lequel
le corps a une paroi latérale comprenant des moyens de fixation configurés pour fixer le corps à la première et la deuxième pièce,
la pointe a une paroi latérale de forme distincte de celle d'une surface de révolution, et
la pointe et le corps sont reliés par une zone sécable configurée pour être rompue en vue de détacher la pointe du corps.

Ainsi, le composant de fixation selon l'invention permet une fixation solide, efficace, plus légère, sécuritaire, et compacte. Par sa pointe non révolutive, un malaxage et donc un échauffement de la matière des première et deuxième pièces facilitant un transpercement efficace. Les moyens de fixation du corps assurent l'ancrage et l'immobilisation relative des première et deuxième pièces. La zone sécable permet le détachement de la pointe, qui ne demeure donc pas dans l'assemblage final, offrant ainsi un gain de place, de masse et de sécurité.

Avantageusement, le corps a une extrémité proximale et une extrémité distale opposée, la tête étant agencée à l'extrémité proximale du corps et la pointe étant agencée à l'extrémité distale du corps.

Selon un mode de réalisation, la zone sécable est une portion de moindre section.

Ainsi, la zone sécable peut être réalisée sur un composant de fixation monobloc, si bien que le coût du composant de fixation est réduit.

Selon l'invention, les moyens de fixation du corps comprennent un ou plusieurs éléments en saillie radiale par rapport à la paroi latérale et la pointe présente un ou plusieurs éléments en saillie radiale par rapport à la paroi latérale. Selon un mode de réalisation, les un ou plusieurs éléments en saillie radiale des moyens de fixation du corps sont agencés selon un pas P décroissant dans une direction proximale, et/ou les un ou plusieurs éléments en saillie radial de la pointe sont de diamètre d croissant selon la direction proximale.

Avantageusement, la pointe comprend une portion proximale et une portion distale, la portion proximale comportant un ou des éléments en saillie radiale agencés selon un pas p et un diamètre d prédéterminés et la portion distale comprenant la forme non révolutive.

Selon un mode de réalisation, au moins la pointe comprend une surface externe de dureté supérieure, de résistance thermique supérieure et de coefficient de frottement inférieur, à un matériau interne du composant de fixation.

La surface externe peut être formée d'une ou plusieurs couches superposées. Avantageusement, la pointe comprend un revêtement ayant une première couche comprenant un matériau thermiquement plus isolant qu'un matériau interne de la pointe, une deuxième couche comprenant un matériau de dureté supérieure à celle du matériau interne de la pointe, et une troisième couche comprenant un matériau thermiquement plus conducteur que le matériau interne de la pointe. La première couche est de préférence la couche externe. La première ou la deuxième couche, ou bien une couche additionnelle, peut en outre présenter un coefficient de frottement inférieur à celui d'un matériau interne de la pointe.

Selon un mode de réalisation, la pointe, ou une portion distale de la pointe, est rapportée sur le reste du composant de fixation et comprend un matériau distinct d'un matériau du reste du composant de fixation.

Le fait d'avoir par exemple une pointe en un premier matériau et le corps en un deuxième matériau distinct du premier matériau permet d'utiliser une pointe hautes performances avec un corps économique. En particulier, un matériau de la pointe ou de sa portion distale a une dureté supérieure à celle du reste du composant de fixation. De plus, cela permet que la zone sécable bénéficie d'un traitement de surface, dans le cas où la pointe entière est rapportée sur le corps.

Selon un autre aspect, l'invention a pour objet un procédé d'assemblage d'une première pièce et d'une deuxième pièce par l'intermédiaire d'un composant de fixation ayant les caractéristiques précitées, le procédé comprenant le fait de :
mettre en rotation le composant de fixation autour de l'axe A ;
percer la première et la deuxième pièce au moyen de la pointe du composant de fixation ;
rompre la zone sécable après avoir que la pointe ait percé la première et la deuxième pièce.

Selon un mode de réalisation, la rupture de la zone sécable comprend l'application sur la pointe d'une force ayant une composante orthogonale à l'axe A.

Selon un mode de réalisation, cette force est de direction variable.

Selon un mode de réalisation, le procédé comprend la conformation d'un collet autour du corps du composant de fixation.

Le fait de prévoir un guidage de la matière pour conformer le collet permet d'améliorer la tenue mécanique.

Selon un autre aspect, un dispositif d'assemblage est divulgué, destiné à la mise en oeuvre du procédé d'assemblage susmentionné, le dispositif comprenant :
Un outil d'appui configuré pour provoquer la rupture de la zone sécable du composant de fixation après que la pointe du composant de fixation ait percé la première et la deuxième pièce,
une contre-enclume présentant un logement destiné à conformer un collet autour du corps du composant de fixation.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1A est une vue de côté d'un composant de fixation selon un mode de réalisation de l'invention,
- La figure 1B est une vue de côté d'un composant de fixation selon un mode de réalisation de l'invention, après rupture de la zone sécable,
- La figure 2 est une vue de côté d'un composant de fixation selon un mode de réalisation de l'invention,
- La figure 3 est une vue en coupe d'une partie d'un composant de fixation selon un mode de réalisation de l'invention,
- La figure 4 est une vue illustrant une étape d'un procédé d'assemblage selon un mode de réalisation de l'invention,
- La figure 5A est une vue illustrant une étape d'un procédé d'assemblage selon un mode de réalisation de l'invention,
- La figure 5B est une vue illustrant une étape d'un procédé d'assemblage selon un mode de réalisation de l'invention,
- La figure 5C est une vue illustrant une étape d'un procédé d'assemblage selon un mode de réalisation de l'invention,
- La figure 5D est une vue illustrant une étape d'un procédé d'assemblage selon un mode de réalisation de l'invention,
- La figure 6A est une vue de côté d'un composant de fixation selon un mode de réalisation de l'invention,
- La figure 6B est une vue de côté d'un composant de fixation selon un mode de réalisation de l'invention,
- La figure 7A une vue de côté d'un composant de fixation selon un mode de réalisation de l'invention,
- La figure 7B est une vue de côté d'un composant de fixation selon un mode de réalisation de l'invention,
- Les figures 8A et 8B sont des vues en coupe orthogonale et de dessus d'un composant de fixation selon des modes de réalisation de l'invention.

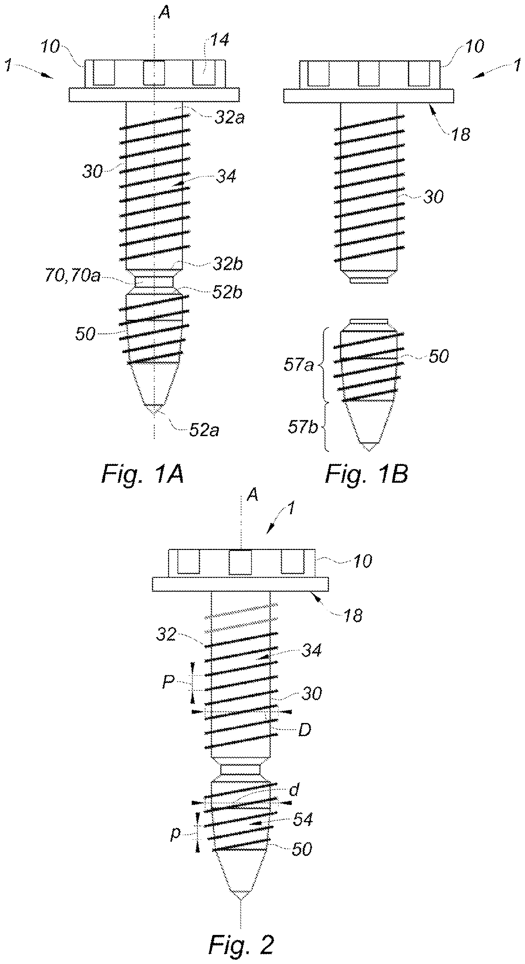

La figure 1A montre un composant 1 de fixation selon un mode de réalisation de l'invention. Le composant 1 de fixation est destiné à l'assemblage d'une première pièce 3 et d'une deuxième pièce 5 qui peuvent être de matériaux différents, par exemple respectivement en aluminium et acier. La première pièce 3 et la deuxième pièce 5 peuvent avoir une forme de plaque. Par exemple, la première pièce 3 est une première tôle et la deuxième pièce 5 est une deuxième tôle 5. Le composant 1 de fixation peut aussi permettre l'assemblage de plus de deux pièces ou tôles empilées.

Le composant 1 de fixation comprend une tête 10, un corps 30 et une pointe 50. Le corps 30 s'étend de façon longitudinale selon un axe A. Le corps 30 présente une extrémité proximale 32a et une extrémité distale 32b opposée. La tête 10 est connectée à l'extrémité 32a proximale du corps 30. La pointe 50 est connectée à l'extrémité 32b distale du corps 30.

Par extrémité proximale on entend ici l'extrémité la plus proche de la tête du composant, où est appliqué un effort de poussée, et par extrémité distale l'extrémité la plus éloignée de la tête et la plus proche de la pointe. De manière similaire, la direction distale est la direction de l'insertion du composant de fixation dans la première et deuxième pièce et la direction proximale est la direction opposée.

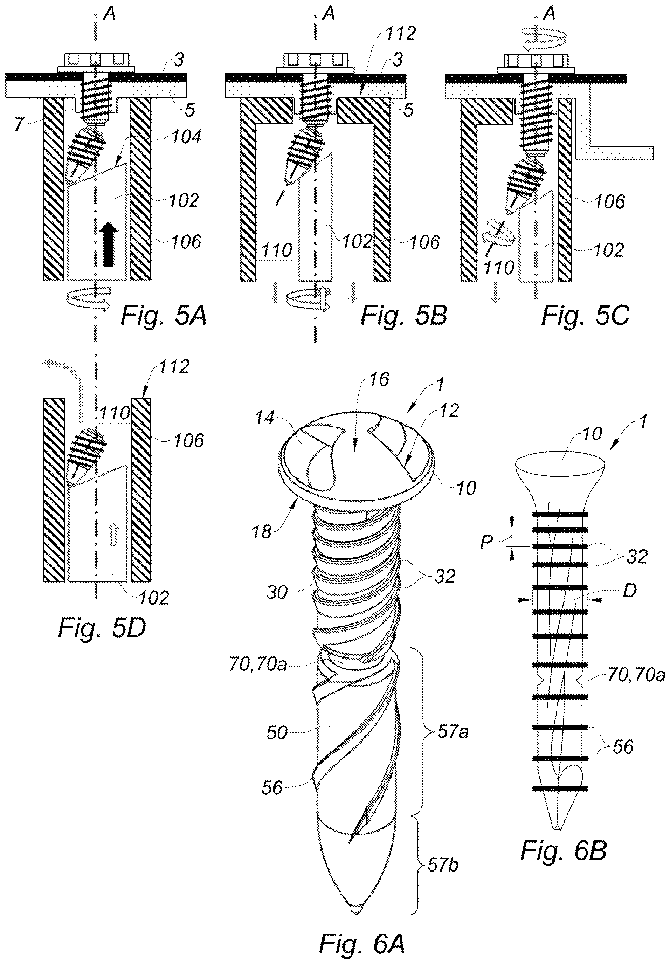

La tête 10 est configurée pour permettre une mise en rotation du composant 1 de fixation autour de l'axe A. Comme illustré sur la figure 6, la tête 10 présente avantageusement à cet effet au moins une surface 12 d'entraînement en rotation qui est arrangée pour permettre d'appliquer sur la tête 10 un couple en vue de faire pivoter le composant 1 de fixation autour de l'axe A. La tête 10 peut avantageusement présenter une empreinte 14 destinée à recevoir un outil, préférentiellement de forme complémentaire, pour mettre en rotation le composant 1 de fixation. La surface 12 d'entraînement délimite au moins en partie cette empreinte 14.

La tête 10 est également configurée pour permettre l'application d'une force de poussée en vue d'enfoncer le composant 1 de fixation à travers la première et la deuxième pièce 3, 5. A cet effet, la tête 10 comprend une surface 16 proximale d'appui, qui peut correspondre à la surface de la tête 10 en saillie par rapport à l'empreinte 14.

La tête 10 peut par ailleurs comprendre une surface 18 d'appui distale configurée pour venir en appui contre la première pièce 3, précisément contre une face 3a supérieure de la première pièce 3. Cette surface 18 d'appui peut présenter une forme annulaire.

Le corps 30 comprend une paroi 34 latérale pourvue de moyens de fixation configurés pour fixer le corps 30 à la première et la deuxième pièce 3, 5 et donc immobiliser la première et la deuxième pièce 3, 5.

Les moyens de fixation comprennent un ou plusieurs éléments 32 en saillie radiale par rapport à la paroi 34 latérale. Le ou les éléments 32 en saillie radiale sont agencés selon un pas P prédéterminé le long de l'axe A et définissent un diamètre D prédéterminé.

Comme illustré sur les figures 2 et 6A, 6B, le pas P est variable, et plus précisément décroissant dans la direction proximale. Cela permet d'accroître le plaquage des première et deuxième pièces 3, 5 l'une contre l'autre tout en améliorant la cohésion entre le corps 30 et ces première et deuxième pièces 3, 5. Le diamètre D peut être constant ou croissant selon la direction proximale.

Le ou les éléments 32 en saillie peuvent être un filet, un annelage par exemple formé de plusieurs anneaux 32, ou les protubérances entre les stries résultant d'un moletage. Le ou les éléments 32 en saillie radiale sont configurés pour s'opposer à un mouvement relatif axial et/ou une rotation relative autour de l'axe A des première et deuxième pièces 3, 5. Le ou les éléments 32 en saillie radiale s'étendent de biais ou orthogonalement par rapport à l'axe A.

Alternativement ou de manière complémentaire, comme visible sur la paroi 34 latérale du corps 30 peut présenter une forme non cylindrique. La paroi 34 latérale ne définit donc pas une surface de révolution. Par exemple, la paroi 34 latérale peut être torsadée.

La pointe 50 comprend une extrémité distale 52a et une extrémité proximale 52b opposée. La pointe 50 présente une paroi 54 latérale. La pointe 50 présente une section transverse croissante à partir de l'extrémité 52a distale, dans la direction proximale. La paroi 54 latérale s'évase donc dans la direction proximale à partir de l'extrémité 52a distale. Comme illustré sur la figure 1B, la pointe 50 peut présenter une portion 57a proximale et une portion 57b distale.

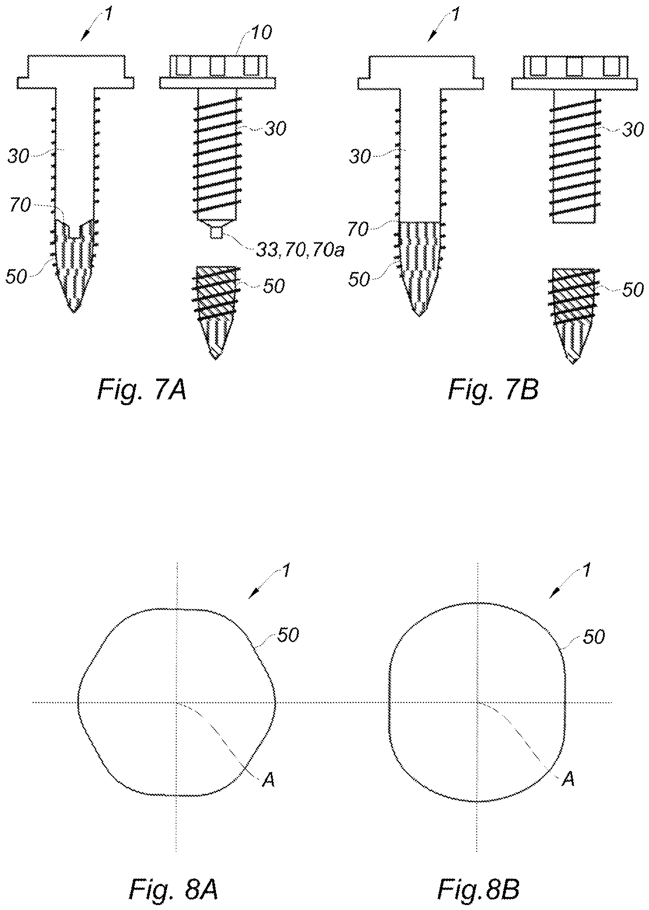

La pointe 50, plus précisément sa paroi 54 latérale, a une forme non révolutive autour de l'axe A, c'est-à-dire autre que celle d'une surface de révolution, de manière à créer, lors de la rotation du composant 1 de fixation, un malaxage et conséquemment un échauffement de la matière de la première et de la deuxième pièce 3, 5, comme cela est visible par exemple sur la figure 6B. Ainsi, la pointe 50 a une section transverse non circulaire, comme illustré sur les figures 8A et 8B.

La forme non révolutive de la paroi 54 latérale peut être plus particulièrement située au niveau de la portion 57b distale de la pointe 50.

Par exemple, la pointe 50 peut présenter des pans, ou des surfaces planes, séparés par des protubérances, excroissances, arêtes ou nervures s'étendant longitudinalement dans un plan contenant l'axe A. Par exemple, la pointe 50 peut présenter une section transverse, i.e. orthogonale à l'axe A, de forme elliptique, ovoïde, polygonale, etc.

La pointe 50 comprend par ailleurs un ou plusieurs éléments 56 en saillie radiale par rapport à la paroi 54 latérale. Le ou les éléments 56 en saillie radiale sont agencés selon un pas p prédéterminé le long de l'axe A et définissent un diamètre d prédéterminé.

De préférence, comme illustré sur les figures les figures 2 et 6A, 6B, le diamètre d est avantageusement variable, et plus précisément croissant dans la direction proximale. Cela permet de former progressivement dans la première et la seconde pièce 3, 5 les formes complémentaires dans lesquelles les éléments 32 en saillie du corps 30 viendront s'implanter pour assurer l'ancrage du composant 1 de fixation dans la première et la seconde pièce 3, 5. Afin de favoriser cet ancrage, le ou les éléments 56 en saillie radiale s'étendent de biais ou orthogonalement par rapport à l'axe A. Le pas p peut être constant.

Le ou les éléments 56 en saillie peuvent être un filet, un annelage par exemple formé de plusieurs anneaux 56, ou les protubérances entre les stries résultant d'un moletage.

Le ou les éléments 56 en saillie sont avantageusement situés au moins sur la portion 57a proximale de la pointe 50. La portion 57b distale peut en être dépourvue.

On notera que la plus grande section transverse de la pointe 50 reste avantageusement inférieure ou égale à la section transverse du corps 30. Cependant, selon un mode de réalisation non représenté, le composant 1 de fixation peut présenter une portion à section transverse plus importante située en amont de la partie proximale du corps 30, c'est-à-dire distalement par rapport à celle-ci. Cela permet de bénéficier d'un retour élastique de la matière au cours de l'assemblage, au moment où la partie proximale du corps 30 s'insère au niveau des pièces 3,5. Cette portion, à section transverse plus importante que celle de la partie proximale du corps 30, peut être située sur la pointe 50 (sur sa partie distale 52a ou proximale 52b) ou sur la partie distale du corps 30. Cette portion est ainsi avantageusement située avant la zone du corps 30 de pas P minimum, i.e. distalement par rapport à celle-ci.

Le composant 1 de fixation, ou au moins la pointe 50, comprend avantageusement un traitement de surface destiné à former une barrière thermique. Cela permet de protéger le composant 1 de fixation, ou au moins la pointe 50, de l'échauffement résultant de la friction entre le composant 1 de fixation et les première et deuxième pièces 3, 5 ainsi que du malaxage de la matière des première et deuxième pièces 3, 5. En effet, lors de l'implantation du composant 1 de fixation, l'énergie thermique due à l'élévation de température se concentre ainsi dans les première et deuxième pièces 3, 5 en baissant leurs propriétés mécaniques et sans impacter les performances du composant 1 de fixation. Ce traitement de surface est par exemple à base d'une céramique ou de carbure. Ainsi, le composant 1 de fixation, ou au moins la pointe 50, comprend un revêtement ou une couche d'isolation thermique. En particulier, une surface externe du composant 1 de fixation ou de la pointe est thermiquement plus isolante qu'une partie interne du composant 1 de fixation.

De surcroît, le composant 1 de fixation, ou au moins la pointe 50, peut avantageusement comprendre un traitement de surface additionnel destiné à élever la conductivité thermique sous la couche d'isolation thermique. Ainsi, le composant 1 de fixation, ou au moins la pointe 50, peut avoir une sous-couche comprenant un matériau thermiquement conducteur, par exemple du cuivre ou de l'argent. Cette sous-couche de conduction thermique permet de renforcer la protection thermique du composant 1 de fixation, ou au moins de la pointe 50, en permettant à l'énergie thermique de se diffuser et se répartir axialement le long du composant 1 de fixation, évitant ainsi la concentration de points chauds.

Par ailleurs, il est important que le composant 1 de fixation conserve le plus longtemps possible sa géométrie durant la phase de perforation. Pour ce faire, le composant 1 de fixation, au moins sa pointe 50, peut comprendre un traitement de surface destiné à augmenter sa dureté, si bien qu'une surface externe du composant 1 de fixation, ou de la pointe 50, a une dureté supérieure à celle d'une portion interne du composant 1 de fixation. Cela permet de garantir un différentiel de dureté favorable au composant 1 de fixation tout au long du cycle d'implantation. Le traitement de surface peut être un traitement thermique ; il peut s'agir d'un traitement de surface de type carbonitruration, cémentation, trempe ou nitruration. Le traitement de surface peut être alternativement ou additionnellement un revêtement par exemple de type nickelage. Ainsi, le composant 1 de fixation, ou au moins la pointe 50, peut comprendre une surface externe de dureté supérieure à celle d'une partie interne du composant 1 de fixation. Par exemple, la surface externe comprend un matériau de dureté égale ou supérieure à 500 HV.

De plus, en vue d'empêcher une détérioration des performances mécaniques du composant 1 de fixation au cours de la perforation, le composant 1 de fixation, ou au moins la pointe 50, peut comprendre un traitement de surface destiné à réduire son coefficient de frottement, par exemple un filmogène ou un nickelage chimique pouvant inclure un ou plusieurs additifs comme de la céramique. Ainsi, le composant 1 de fixation, ou au moins la pointe 50, peut comprendre une surface externe à coefficient d'adhérence inférieur à celui d'une partie interne du composant 1 de fixation.

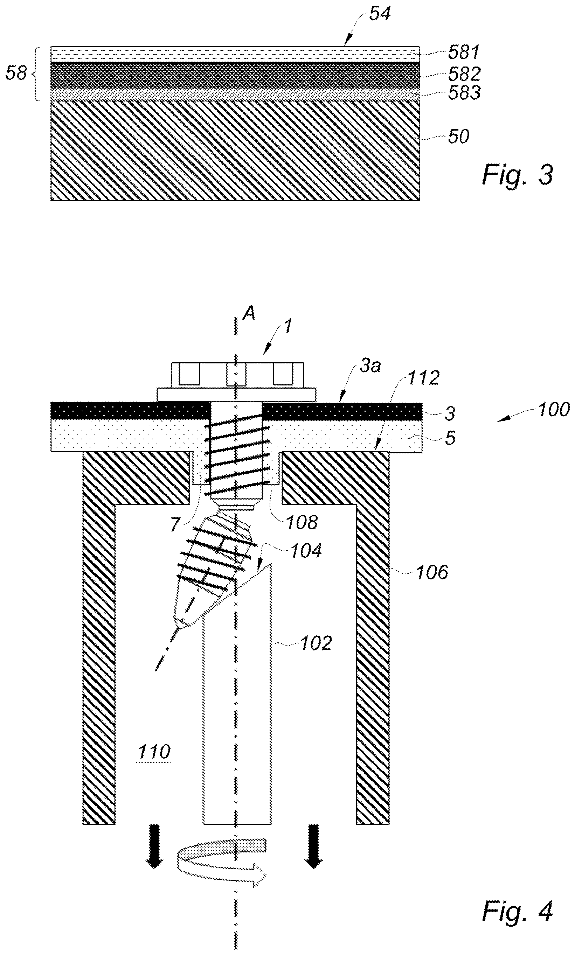

Comme illustré sur la figure 3, au moins la pointe 50 du composant 1 de fixation comprend ainsi un revêtement ou peau 58 externe ayant : un matériau d'une dureté supérieure à celui d'une partie 60 interne du composant 1 de fixation, et/ou un matériau de résistance thermique supérieure à celui de la partie 60 interne, et/ou un matériau à coefficient de frottement inférieur à celui de la partie 60 interne. La peau 58 externe peut en outre comprendre un matériau de conductivité thermique supérieure à celui de la partie 60 interne.

Cette peau 58 externe est formée de plusieurs couches superposées, par exemple une première couche 581 de résistance thermique supérieure et/ou de coefficient de frottement inférieur à la partie 60 interne, une deuxième couche 582 de dureté supérieure et/ou de coefficient de frottement inférieur à la partie 60 interne, et éventuellement une troisième couche 583 de conduction thermique. La peau 58 externe peut comprendre une couche de coefficient de frottement inférieur à la partie 60 interne qui peut être distincte des deux ou trois autres. La peau 58 externe pourrait alternativement comprendre une seule couche, incluant par exemple du graphène, ou un nickelage chimique incluant un ou plusieurs additifs tels que du PTFE, du cuivre ou de la céramique, configurée pour à la fois isoler thermiquement, durcir, et réduire le coefficient de frottement de la surface externe d'au moins la pointe 50 du composant 1 de fixation.

On notera que le composant 1 de fixation peut comprendre deux pièces assemblées.

En particulier, au moins la portion 57b distale de la pointe 50, ou la totalité de la pointe 50, peut être une pièce distincte du reste du composant 1 de fixation et peut être rapportée sur celui-ci. Ainsi, la portion 57b distale peut être rapportée sur la portion 57a proximale de la pointe 50. Le cas échéant, la portion 57b distale et la portion 57a proximale peuvent avoir des surfaces de jonction de forme complémentaires.

En référence aux figures 7A et 7B, la pointe 50 en entier est une pièce distincte du corps 30 du composant 1 de fixation et peut être rapportée sur celui-ci. La pointe 50, notamment son extrémité proximale 52b, et le corps 30, notamment son extrémité distale 32b, peuvent à cet effet présenter une forme complémentaire.

Selon la figure 7A, un tenon 33, par exemple ici solidaire du corps 30, est emboîté dans un logement 53, par exemple ici solidaire de la pointe 50.

La solidarisation de la pointe 50 et du corps 30 peut être réalisée par exemple une soudure, un collage ou un sertissage. Le cas échéant, la solidarisation de la portion 57b distale de la pointe 50 et de sa portion 57b proximale peut être réalisée par exemple par une soudure, un collage ou un sertissage.

La pointe 50, ou sa portion 57b distale, peut avantageusement comprendre un matériau de dureté supérieure à celle d'un matériau du corps 30, ou de la portion 57a proximale de la pointe 50. Par exemple, la pointe 50, ou sa portion 57b distale, comprend du carbure, de la céramique, du graphène ou un acier d'une dureté supérieure à un acier du corps 30 ou de la tête 10, ou de la portion 57a proximale. Ce mode de réalisation est particulièrement avantageux dans le cas où la pointe 50 est rapportée sur le corps 30, ou sa portion 57b distale rapportée sur sa portion 57a proximale.

Comme illustré notamment sur les figures 1A, 1B, 2 et 6A, le composant 1 de fixation comprend en outre une zone 70 sécable destinée à être rompue en vue de détacher la pointe 50 du corps 30 après perforation des première et deuxième pièces 3, 5. La zone 70 sécable relie la pointe 50 et le corps 30. Cette zone 70 sécable est agencée à l'extrémité distale 32b du corps 30 et à l'extrémité proximale 52b de la pointe 50.

La zone 70 sécable est une zone de fragilité prévue entre la pointe 50 et le corps 30 du composant 1 de fixation. La zone 70 sécable est donc une zone prédéterminée de moindre résistance mécanique du composant 1 de fixation. Cette zone 70 sécable définit la zone de césure du composant 1 de fixation qui est configurée pour rompre sous l'effet d'un effort à composante orthogonale à l'axe A exercé sur la pointe 50. La zone 70 sécable est interposée entre les moyens de fixation qui fixent le corps 30 du composant 1 de fixation aux première et deuxième pièces 3, 5 et la pointe 50 qui devient inutile après perçage et doit donc avantageusement être éjectée.

La zone 70 sécable peut être une portion 70a de moindre épaisseur, ou moindre section transverse par rapport à l'axe A, notamment une portion à restriction de diamètre, c'est-à-dire de diamètre inférieur à celui du corps 30 et à un diamètre de la pointe 50. La zone 70 sécable est de préférence une portion pleine, c'est-à-dire non creuse. Le composant 1 de fixation peut comprendre une unique portion 70a sécable, qui est préférentiellement agencée au centre du corps 30 et de la pointe 50. La portion 70a s'étend avantageusement parallèlement à l'axe A. La portion 70a peut présenter une forme révolutive, par exemple cylindrique, conique ou tronconique, afin de favoriser sa rupture.

La zone 70 sécable peut présenter la forme d'une gorge annulaire s'étendant autour de l'axe A. La zone 70 sécable peut être le tenon 33 emboîté à la pointe 50 selon l'exemple de la figure 7A. Selon les figures 7A et 7B, la zone 70 sécable peut être le plan de joint entre la pointe 50 et le corps 30, ou le plan de joint entre la portion 57b distale et la portion 57a proximale de la pointe 50.

La zone 70 sécable peut être obtenue par roulage.

L'invention concerne aussi un procédé d'assemblage d'une première pièce 3 et d'une deuxième pièce 5 par l'intermédiaire d'un composant 1 de fixation ayant tout ou partie des caractéristiques décrites ci-dessus, le procédé comprenant le fait de :
mettre en rotation le composant 1 de fixation autour de l'axe A ;
percer la première et la deuxième pièce 3, 5 au moyen de la pointe 50 du composant 1 de fixation ;
rompre la zone 70 sécable après avoir que la pointe 50 ait percé la première et la deuxième pièce 3, 5.

Le perçage de la première et de la deuxième pièce 3, 5 peut être réalisé par une effort de poussée axiale exercé sur le composant 1 de fixation, notamment sur la tête 10.

Le perçage de la première et de la deuxième pièce 3, 5 peut être réalisé alors que le composant 1 de fixation pivote autour de l'axe A.

La mise en rotation du composant 1 de fixation autour de l'axe A peut précéder avantageusement le perçage, être concomitante au perçage, ou avoir lieur après que le perçage ait commencé. La mise en rotation peut être réalisée par l'intermédiaire d'un outil destiné à exercer un couple sur la tête 10 du composant 1 de fixation.

La rupture de la zone 70 sécable comprend l'application sur la pointe d'une force ayant une composante orthogonale à l'axe A. Cette force peut être de direction variable autour de l'axe A. Par exemple, le procédé comprend la mise en contact de la pointe 50 avec un outil d'appui comme une cale biaise 102, présentant un plan 104 incliné par rapport à l'axe A, après perçage des première et deuxième pièces 3, 5, pour rompre la zone 70 sécable. Cet outil ou cale biaise 102 peut être fixe ou mobile, par exemple en rotation autour de l'axe A et/ou en translation le long de l'axe A, comme illustré sur les figures 4 et 5A à 5D.

Le procédé comprend également un ancrage du composant 1 de fixation dans les première et deuxième pièces 3, 5. Cet ancrage est réalisé par l'intermédiaire des moyens de fixation du corps 30, c'est-à-dire notamment par l'engagement du ou des éléments 32 en saillie dans les première et deuxième pièces 3, 5. Il peut y avoir en outre un plaquage des première et deuxième pièces 3, 5 l'une contre l'autre.

Comme visible sur la figure 4, le procédé peut comprendre la conformation d'un collet 7 autour du corps 30 du composant 1 de fixation au cours du perçage. Ce collet 7 peut être formé au moyen d'une contre-enclume 106 ayant un logement 108 destiné à conformer le collet 7. Ce collet 7 a donc la particularité d'avoir une forme prédéterminée, obtenue ici par un guidage de la matière dans le logement 108. Le logement 108 s'étend par exemple au droit de l'outil d'appui ou cale biaise 102.

Comme illustré sur les figures 5A à 5D, le procédé peut comprendre une étape de collecte de la pointe 50 détachée, par exemple par aspiration.

Il est également divulgué un dispositif 100 d'assemblage destiné à la mise en oeuvre du procédé d'assemblage décrit ci-dessus, le dispositif 100 comprenant :
un outil d'appui, comme une cale biaise 102, configuré pour venir en appui contre la pointe 50 afin de provoquer la rupture de la zone 70 sécable du composant 1 de fixation après que la pointe 50 du composant de fixation ait percé la première et la deuxième pièce 3, 5,
une contre-enclume 106 présentant un logement 108 destiné à conformer un collet 7 autour du corps 30 du composant 1 de fixation. La contre-enclume a une face proximale 112 destinée à venir en appui contre une face distale de la deuxième pièce 5.

Le dispositif 100 d'assemblage peut en outre comprendre des moyens d'évacuation configurés pour évacuer la pointe 50 détachée du corps 30. Les moyens d'évacuation peuvent comprendre un conduit 110 d'évacuation permettant d'évacuer la pointe 50 depuis la cale biaise 102 jusqu'à un récipient de collecte (non représenté), par gravité ou par l'intermédiaire d'une unité d'aspiration (non représentée).

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention telle que revendiquée.

## Revendications

1. Composant (1) de fixation destiné à l'assemblage d'une première pièce (3) et d'une deuxième pièce (5), le composant (1) de fixation comprenant:
un corps (30) s'étendant longitudinalement selon un axe (A),
une tête (10) configurée pour permettre une mise en rotation du composant (1) de fixation autour de l'axe (A), et
une pointe (50) reliée au corps (30), dans lequel
le corps (30) a une paroi (34) latérale comprenant des moyens de fixation configurés pour fixer le corps (30) à la première et la deuxième pièce (3, 5), les moyens de fixation comprenant un ou plusieurs éléments (32) en saillie radiale par rapport à la paroi (34) latérale,
la pointe (50) et le corps (30) sont reliés par une zone (70) sécable configurée pour être rompue en vue de détacher la pointe (50) du corps (30),
**caractérisé en ce que** la pointe (50) a une paroi (54) latérale de forme distincte de celle d'une surface de révolution, et **en ce que** la pointe (50) comprend un ou plusieurs éléments (56) en saillie radiale par rapport à la paroi (54) latérale, et **en ce que**
le ou les éléments (32) en saillie radiale des moyens de fixation du corps (30) sont agencés selon un pas (P) variable le long de l'axe (A) tandis que le ou les éléments (56) en saillie radiale de la pointe (50) sont agencés selon un pas (p) prédéterminé le long de l'axe (A).

2. Composant (1) de fixation selon la revendication 1, dans lequel la zone (70) sécable est une portion (70a) de moindre section.

3. Composant (1) de fixation selon la revendication 1 ou 2, dans lequel les moyens de fixation comprennent un le ou les éléments (32) en saillie radiale sont agencés selon un pas P décroissant dans une direction proximale, et/ou le ou les éléments (56) en saillie radiale ont un diamètre d croissant selon la direction proximale.

4. Composant (1) de fixation selon l'une des revendications précédentes, dans lequel au moins la pointe (50) comprend une surface (58) externe de dureté supérieure, de résistance thermique supérieure et de coefficient de frottement inférieur, à un matériau interne du composant (1) de fixation.

5. Composant de fixation selon l'une des revendications précédentes, dans lequel la pointe (50), ou une portion (57b) distale de la pointe (50), est rapportée sur le reste du composant (1) de fixation et comprend un matériau distinct d'un matériau du reste du composant (1) de fixation.

6. Procédé d'assemblage d'une première pièce (3) et d'une deuxième pièce (5) par l'intermédiaire d'un composant (1) de fixation selon l'une des revendications précédentes, le procédé comprenant le fait de :
mettre en rotation le composant (1) de fixation autour de l'axe (A) ;
percer la première et la deuxième pièce (3, 5) au moyen de la pointe (50) du composant (1) de fixation ;
rompre la zone (70) sécable après que la pointe (50) ait percé la première et la deuxième pièce (3, 5).

7. Procédé selon la revendication précédente, dans lequel la rupture de la zone (70) sécable comprend l'application sur la pointe (50) d'une force ayant une composante orthogonale à l'axe (A).

8. Procédé selon la revendication précédente, dans lequel cette force est de direction variable.

9. Procédé selon l'une des revendications 6 à 8, dans lequel le procédé comprend la conformation d'un collet (7) autour du corps (30) du composant (1) de fixation.

## Patentansprüche

1. Befestigungskomponente (1), die für das Zusammenbauen eines ersten Teils (3) und eines zweiten Teils (5) bestimmt ist, wobei die Befestigungskomponente (1) Folgendes umfasst:
einen Körper (30), der sich in Längsrichtung entlang einer Achse (A) erstreckt,
einen Kopf (10), der dazu konfiguriert ist, eine Drehung der Befestigungskomponente (1) um die Achse (A) zu ermöglichen, und
eine Spitze (50), die mit dem Körper (30) verbunden ist, wobei
der Körper (30) eine Seitenwand (34) aufweist, die Befestigungsmittel umfasst, die dazu konfiguriert sind, den Körper (30) an das erste Teil und das zweite Teil (3, 5) zu befestigen, wobei die Befestigungsmittel ein oder mehrere Elemente (32) umfassen, die in Bezug auf die Seitenwand (34) radial vorstehen,
die Spitze (50) und der Körper (30) durch einen teilbaren Bereich (70) verbunden sind, der dazu konfiguriert ist, gebrochen zu werden, um die Spitze (50) vom Körper (30) zu lösen,
**dadurch gekennzeichnet, dass** die Spitze (50) eine Seitenwand (54) mit einer Form aufweist, die sich von der einer Rotationsfläche unterscheidet, und dass die Spitze (50) ein oder mehrere Elemente (56) umfasst, die in Bezug auf die Seitenwand (54) radial vorstehen, und dass das oder die radial vorstehenden Elemente (32) der Befestigungsmittel des Körpers (30) in einer variablen Steigung (P) entlang der Achse (A) angeordnet sind, während das oder die radial vorstehenden Elemente (56) der Spitze (50) in einer vorbestimmten Steigung (p) entlang der Achse (A) angeordnet sind.

2. Befestigungskomponente (1) nach Anspruch 1, wobei der teilbare Bereich (70) ein Abschnitt (70a) mit kleinerem Querschnitt ist.

3. Befestigungskomponente (1) nach Anspruch 1 oder 2, wobei die Befestigungsmittel, die ein das oder die radial vorstehenden Elemente (32) umfassen, in einer in einer proximalen Richtung abnehmenden Steigung P angeordnet sind, und/oder das oder die radial vorstehenden Elemente (56) einen zunehmenden Durchmesser d in der proximalen Richtung aufweisen.

4. Befestigungskomponente (1) nach einem der vorhergehenden Ansprüche, wobei zumindest die Spitze (50) eine Außenfläche (58) mit einer höheren Härte, einem höheren thermischen Widerstand und einem niedrigeren Reibungskoeffizienten umfasst als ein Innenmaterial der Befestigungskomponente (1).

5. Befestigungskomponente nach einem der vorhergehenden Ansprüche, wobei die Spitze (50) oder ein distaler Abschnitt (57b) der Spitze (50) an dem Rest der Befestigungskomponente (1) angebracht ist und ein Material umfasst, das sich von einem Material des Rests der Befestigungskomponente (1) unterscheidet.

6. Verfahren zum Zusammenbauen eines ersten Teils (3) und eines zweiten Teils (5) mit Hilfe einer Befestigungskomponente (1) nach einem der vorhergehenden Ansprüche, wobei das Verfahren das Folgende umfasst:
Drehen der Befestigungskomponente (1) um die Achse (A);
Durchbohren des ersten und des zweiten Teils (3, 5) mittels der Spitze (50) der Befestigungskomponente (1);
Brechen des teilbaren Bereichs (70), nachdem die Spitze (50) das erste und das zweite Teil (3, 5) durchbohrt hat.

7. Verfahren nach dem vorhergehenden Anspruch, wobei das Brechen des teilbaren Bereichs (70) das Aufbringen einer Kraft auf die Spitze (50) mit einer zur Achse (A) orthogonalen Komponente umfasst.

8. Verfahren nach dem vorhergehenden Anspruch, wobei die Kraft eine variable Richtung hat.

9. Verfahren nach einem der Ansprüche 6 bis 8, wobei das Verfahren das Formen eines Kragens (7) um den Körper (30) der Befestigungskomponente (1) umfasst.

## Claims

1. A fastening component (1) intended for the assembly of a first part (3) and a second part (5), the fastening component (1) comprising:
a body (30) extending longitudinally according to an axis (A),
a head (10) configured to enable a rotation of the fastening component (1) about the axis (A), and
a tip (50) connected to the body (30), wherein
the body (30) has a lateral wall (34) comprising fastening means configured to fasten the body (30) to the first and second parts (3, 5), the fastening means comprising one or several element(s) (32) projecting radially with respect to the lateral wall (34),
the tip (50) and the body (30) are connected by a frangible area (70) configured to be broken in order to detach the tip (50) from the body (30),
**characterized in that** the tip (50) has a lateral wall (54) with a shape distinct from that of a surface of revolution, and **in that**
the tip (50) comprises one or several elements (56) projecting radially with respect to the lateral wall (54), and **in that**
the radially projecting element(s) (32) of the fastening means of the body (30) are arranged according to a variable pitch (P) along the axis (A) whereas the radially projecting element(s) (56) of the tip (50) are arranged according to a predetermined pitch (p) along the axis (A).

2. The fastening component (1) according to claim 1, wherein the frangible area (70) is a portion (70a) with a smaller section.

3. The fastening component (1) according to claim 1 or 2, wherein the fastening means comprise one or several radially projecting element(s) arranged according to a pitch P decreasing in a proximal direction, and/or the one or several radially projecting element(s) (56) have a diameter increasing according to the proximal direction.

4. The fastening component (1) according to one of the preceding claims, wherein at least the tip (50) comprises an outer surface (58) with a higher hardness, a higher thermal resistance and a lower coefficient of friction, than an inner material of the fastening component (1).

5. The fastening component according to one of the preceding claims, wherein the tip (50), or a distal portion (57b) of the tip (50), is affixed on the remainder of the fastening component (1) and comprises a material distinct from a material of a remainder of the fastening component (1).

6. A method for assembling a first part (3) and a second part (5) via a fastening component (1) according to one of the preceding claims, the method comprising the steps of:
rotating the fastening component (1) about the axis (A);
drilling the first and second parts (3, 5) by means of the tip (50) of the fastening component (1);
breaking the frangible area (70) after the tip (50) has drilled the first and second parts (3, 5).

7. The method according to the preceding claim, wherein the breakage of the frangible area (70) comprises the application on the tip (50) of a force having a component orthogonal to the axis (A).

8. The method according to the preceding claim, wherein the force has a variable direction.

9. The method according to one of claims 6 to 8, wherein the method comprises shaping of a collar (7) around the body (30) of the fastening component (1).
